# EUROPÄISCHE PATENTSCHRIFT

(11) **EP 2 582 512 B1**
(45) Veröffentlichungstag und Bekanntmachung des Hinweises auf die Patenterteilung: **18.03.2015**
(21) Anmeldenummer: 11785288.9
(22) Anmeldetag: 17.06.2011
(51) Int. Cl.: B29D 30/20

(54) **VERFAHREN UND VORRICHTUNG ZUR HERSTELLUNG VON REIFENROHLINGEN**
METHOD AND DEVICE FOR PRODUCING GREEN TIRES
PROCEDE ET DISPOSITIF DE FABRICATION DE PNEUS CRUS

(30) Priorität: 18.06.2010 DE 102010024875
(43) Veröffentlichungstag der Anmeldung: 24.04.2013
(73) Patentinhaber: Harburg-Freudenberger Maschinenbau GmbH, 21079 Hamburg (DE)
(72) Erfinder: WEDEKIND, Werner, 21376 Salzhausen (DE)
(74) Vertreter: Patentanwälte Klickow & Partner Partnerschaftsgesellschaft mbB
(86) Internationale Anmeldenummer: PCT/DE2011/001274
(87) Internationale Veröffentlichungsnummer: WO 2012/019580

(56) Entgegenhaltungen:
- EP-A1- 0 649 730
- EP-A2- 1 785 284
- WO-A1-00/44547
- JP-A- 5 229 032
- JP-A- 2001 113 610
- US-A- 4 273 177
- US-A- 5 605 596
- US-A- 5 904 788

## Beschreibung

Die Erfindung betrifft ein Verfahren zur Herstellung von Reifenrohlingen gemäß dem Oberbegriff des Anspruchs 1, bei dem mindestens ein streifenförmiges Material mindestens einer Reifenaufbautrommel zugeführt wird und bei dem mindestens ein Seitenstreifen vor einem Längenzuschnitt mit einem Gürtelstreifen verbunden wird und eine Querausrichtung der Kombination des Gürtelstreifens mit dem mindestens einen Seitenstreifen unter Verwendung mindestens einer Kamera durchgeführt wird, die einen Absatz im Übergang des Gürtelstreifens zum Seitenstreifen erfasst.

Die Erfindung betrifft darüber hinaus eine Vorrichtung zur Herstellung von Reifenrohlingen gemäß dem Oberbegriff des Anspruchs 7, wobei die Vorrichtung mindestens eine Reifenaufbautrommel und mindestens eine Zuführeinrichtung für ein streifenförmiges Material aufweist und bei der eine Einrichtung zur Verbindung mindestens eines Seitenstreifens mit einem Gürtelstreifen in einer Transportrichtung des Gürtelstreifens vor einer Einrichtung zur Durchführung eines Längenzuschnittes des Gürtelstreifens angeordnet ist und bei der eine Einrichtung zur Querausrichtung der Kombination des Gürtelstreifens und des mindestens einen Seitenstreifens eine Kamera aufweist. Vorteilhafte Ausgestaltungen der Erfindung sind Gegenstand der abhängigen Ansprüche.

Bei der Reifenherstellung werden typischerweise mehrere und unterschiedliche streifenförmige Materialien der Reifenaufbautrommel zugeführt. Als problematisch erweist sich die Zuführung von relativ schmalen Randstreifen, da diese nicht nur schmal sondern auch sehr weich sind und aus einem klebrigen Material bestehen.

Verwendete Gürtelstreifen werden vor ihrer Zuführung zur Reifenaufbautrommel typischerweise hinsichtlich der Lage ihrer Kanten ausgerichtet. Üblicherweise erfolgt eine Zentrierung des zugeführten Gürtelstreifens relativ zu einer Mittellinie dadurch, dass ein Abstand zu den beiden Seitenkanten durch eine Querverstellung vergleichmäßigt wird.

Die separate Zuführung der Gürtelstreifen und der Randstreifen verursacht einen relativ hohen maschinenbaulichen Aufwand, eine gemeinsame Zuführung scheiterte bislang an den Materialeigenschaften der Randstreifen.

Aus der US 42 73 177 ist es bereits bekannt, Gürtelstreifen für die Herstellung von Reifenrohlingen mit einem Seitenstreifen zu verbinden. Eine derartige Verfahrensweise wird ebenfalls in der EP 17 85 284 A beschrieben.

Aus der JP 5-229032 A ist es bekannt, eine Querausrichtung einer Gürtelstreifenanordnung mit Seitenstreifen unter Verwendung von Kameras durchzuführen. Die Kameras erfassen eine Mittelmarkierung des Gürtelstreifens.

In der JP 2001113610 A wird eine Einrichtung beschrieben, bei der jeweils Seitenbereiche von Gürtelstreifen mit Seitenstreifen von Kameras erfasst werden. Über Höhenmessungen werden unterschiedliche Höhenniveaus erkannt und aus Höhendifferenzen auf die Positionierung von Absätzen rückgeschlossen.

Aufgabe der vorliegenden Erfindung ist es, ein Verfahren der einleitend genannten Art derart zu verbessern, dass die Handhabung der streifenförmigen Materialien erleichtert wird.

Diese Aufgabe wird erfindungsgemäß dadurch gelöst, dass der Absatz unter Verwendung einer Auswertungseinrichtung erkannt wird, die eine Bildauswertung durchführt.

Weitere Aufgabe der vorliegenden Erfindung ist es, eine Vorrichtung der einleitend genannten Art derart zu verbessern, dass die Handhabung von streifenförmigen Materialien erleichtert wird.

Diese Aufgabe wird erfindungsgemäß dadurch gelöst, dass die Kamera mit einer Auswertungseinrichtung gekoppelt ist, die zur Erkennung eines Absatzes im Bereich eines Überganges des Gürtelstreifens zum Seitenstreifen ausgebildet ist und die zur Durchführung einer Bildauswertung ausgebildet ist.

Durch die Verwendung einer Kamera, die dazu geeignet ist, einen Höhenabsatz im Übergang des Gürtelstreifens zum Randstreifen zu erfassen ist es möglich, trotz des seitlich über den Gürtelstreifen überstehenden Randstreifens, der ein vergleichsweise undefiniertes Randprofil besitzt, eine Zentrierung oder Kantenregelung des Gürtelstreifens hinsichtlich der tatsächlichen Kante des Gürtelstreifens durchzuführen. Trotz der Produktionsvereinfachung durch die Zufuhr des Seitenstreifens vor dem Zuschnitt wird hierdurch die Qualität der Querausrichtung des Gürtelstreifens beibehalten.

Eine digitale Erfassung der Positionierung des Absatzes wird dadurch unterstützt, dass der Absatz unter Verwendung einer Auswertungseinrichtung erkannt wird, die eine Bildauswertung durchführt.

Eine Konturerfassung auch bei dunklen zu erfassenden Objekten wird dadurch unterstützt, dass eine von einer Beleuchtung verursachte Schattenbildung ausgewertet wird.

Eine Positionskontrolle des Seitenstreifens wird dadurch unterstützt, dass zusätzlich eine Erfassung eines Außenrandes des Seitenstreifens durchgeführt wird.

Eine zuverlässige Positionserfassung des Gürtelstreifens wird dadurch erreicht, dass im Bereich beider Längskanten des Gürtelstreifens die Erfassung von Absätzen durchgeführt wird.

Eine zu einer Mittellinie symmetrische Ausrichtung des Gürtelstreifens auf der Reifenaufbautrommel wird dadurch unterstützt, daß basierend auf der Erfassung der Absätze eine Mittenausrichtung des Gürtelstreifens durchgeführt wird.

Eine einfache Mittenausrichtung des Gürtelstreifens wird dadurch erreicht, daß die Mittenausrichtung durch eine Querverschiebung einer Zuführeinrichtung für den Gürtelstreifen durchgeführt wird.

In den Zeichnungen sind Ausführungsbeispiele der Erfindung schematisch dargestellt. Es zeigen:
- Fig. 1: einen schematischen Querschnitt durch einen Gürtelstreifen mit zwei angesetzten Randstreifen,
- Fig. 2: ein mehrlagiges Paket von Gürtelstreifen mit seitlich vorstehenden Randstreifen,
- Fig. 3: eine schematische Darstellung zur veranschaulichung einer Formgebung des Reifenrohlings,
- Fig. 4: eine schematische Darstellung einer Meßanordnung zur Erfassung eines absatzförmigen Übergangs von den Randstreifen zum Gürtelstreifen,
- Fig. 5: eine Draufsicht auf die Anordnung gemäß Fig. 4 und
- Fig. 6: eine weitere schematische Darstellung zur Veranschaulichung eines Meßprinzips.

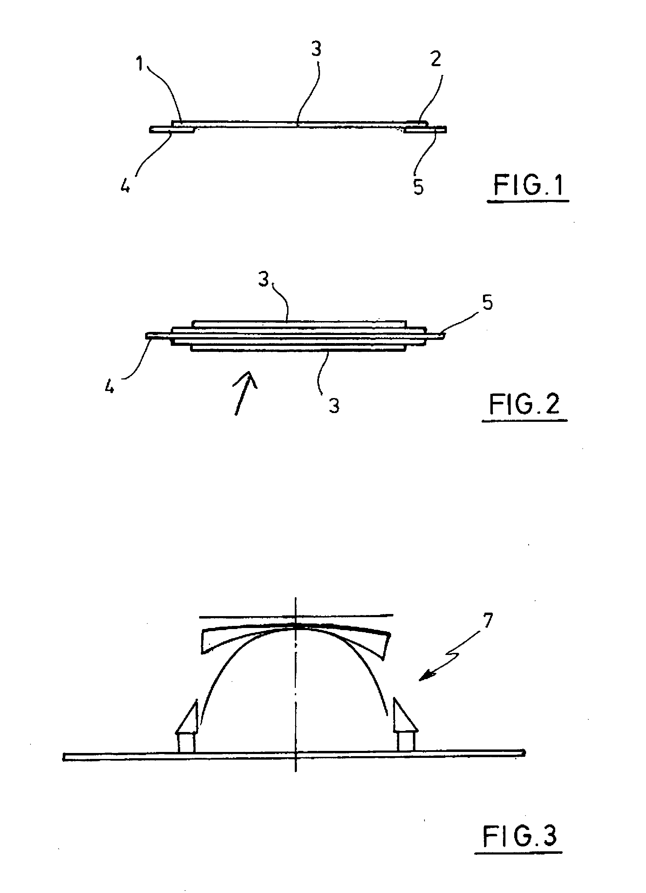

Gemäß der Darstellung in Fig. 1 sind entlang von Rändern (1, 2) eines Gürtelstreifens (3) Randstreifen (4, 5) angeordnet. Die Randstreifen (4, 5) bestehen typischerweise aus einem weichem und zumindest im Oberflächenbereich klebrigen elastomeren Material. Beim dargestellten Ausführungsbeispiel sind die Randstreifen (4, 5) im Bereich einer Unterseite (6) des Gürtelstreifens (3) angeordnet und überlappen sich bereichsweise mit dem Gürtelstreifen (3), um eine Klebeverbindung bereitzustellen.

Fig. 2 zeigt eine Ausführungsform, bei der ein Paket aus einer Mehrzahl von Gürtelstreifen (3) mit seitlich überstehenden Randstreifen (4, 5) versehen ist.

Fig. 3 veranschaulicht eine Formgebung für einen Reifenrohling (7).

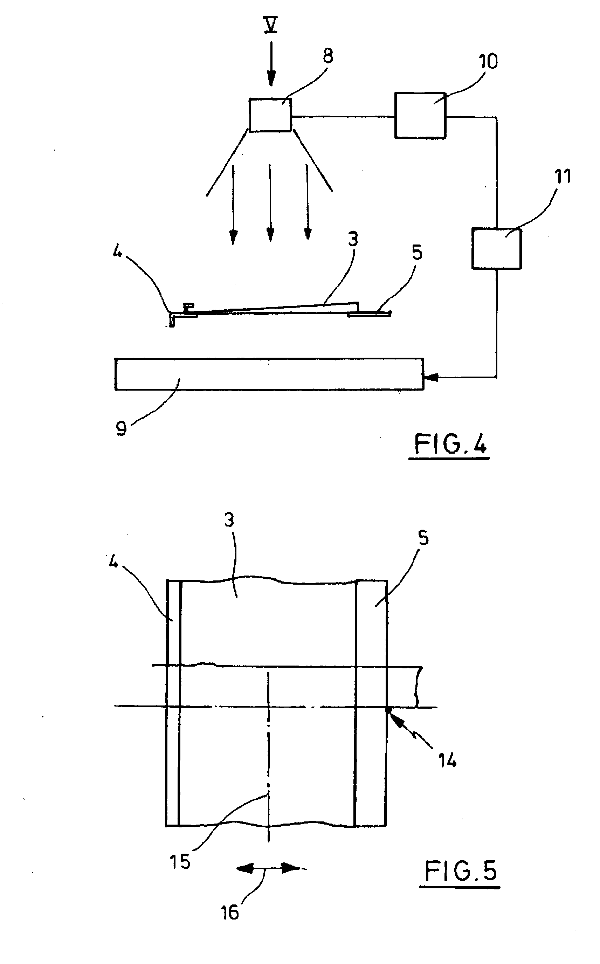

Fig. 4 veranschaulicht die Anordnung einer Kamera (8) oberhalb des Gürtelstreifens (3), wobei der Gürtelstreifen (3) auf einer Zuführeinrichtung (9) angeordnet ist. Die Kamera (8) ist mit einer Auswertungseinrichtung (10) verbunden. Die Auswertungseinrichtung (10) ihrerseits ist mit einer Stelleinrichtung (11) zur Querpositionierung der Zuführeinrichtung (9) gekoppelt.

Die Kamera (8) ist typischerweise als eine CCD-Kamera ausgebildet. Insbesondere ist die Kamera (8) dafür vorgesehen, einen absatzförmigen Übergang von den Randstreifen (4, 5) zum Gürtelstreifen (3) zu erkennen.

Die Kamera (8) ist insbesondere dafür vorgesehen, durch eine geeignete Optik Absätze (12, 13) zu erfassen, die durch die stufenförmigen Übergänge der Randstreifen (4, 5) zum Gürtelstreifen (3) ausgebildet werden. Die Auswertungseinrichtung (10) ermöglicht über eine entsprechende Bildauswertung und Bilderkennung die Verarbeitung der entsprechenden Bildinformationen. Gemäß einer bevorzugten Ausführungsform ist daran gedacht, eine Querausrichtung der Kombination aus dem Gürtelstreifen (3) und den Randstreifen (4, 5) durch Auswertung der Informationen hinsichtlich der Positionierung der Absätze (12, 13) durchzuführen. Aufgrund der vergleichsweise festen Materialkonsistenz des Gürtelstreifens (3) kann hierdurch eine zuverlässige Zentrierung erfolgen. Zusätzlich ist es möglich, auch Außenkanten der Randstreifen (4, 5) zu erfassen und hierdurch die Lage der Randstreifen (4, 5) relativ zum Gürtelstreifen (3) zu kontrollieren. Gegebenenfalls ist eine Rückkopplung auf die Einrichtung möglich, die die Positionierung der Randstreifen (4, 5) relativ zum Gürtelstreifen (3) vornimmt.

Fig. 5 zeigt eine Draufsicht auf die Einrichtung in Fig. 4. Zusätzlich veranschaulicht ist hier eine Positionserfassung (14) für die Außenkanten der Randstreifen (4, 5). Ebenfalls veranschaulicht sind eine Längsrichtung (15) der Zuführeinrichtung (9), die einer Transportrichtung für den Gürtelstreifen (3) entspricht und eine Querrichtung (16), die der Einwirkungsrichtung der Stelleinrichtung (11) entspricht. Hinsichtlich der Querrichtung (16) erfolgt die Positionierung des Gürtelstreifens (3) relativ zu einer nicht dargestellten Reifenaufbautrommel.

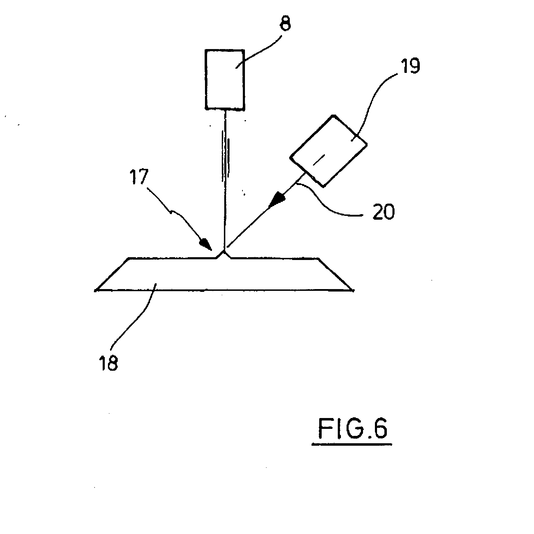

Fig. 6 veranschaulicht schematisch die optische Erfassung eines Höhenprofils (17) im Bereich eines Streifens (18). Von einer Lichtquelle (19) erfolgt eine Beleuchtung des Höhenprofils (17) mit einer Ausbreitungsrichtung des Lichtes (20) derart, daß im Bereich des Höhenprofils (17) unterschiedliche Lichtintensitäten realisiert werden. Dies kann beispielsweise durch eine vollständige oder teilweise Abschattung erfolgen. Durch dieses Meßprinzip ist es möglich, insbesondere bei schwarzen Randstreifen (4, 5) und ebenfalls schwarzen Gürtelstreifen (3) die Absätze (12, 13) zu erkennen.

Eine Abwicklung der Randstreifen (4, 5) von Vorratsrollen erfolgt vorzugsweise in Längsrichtung (15) vor der Zuführeinrichtung (9) in örtlicher Nähe zu einer Abwicklung des Gürtelstreifens (3). Die Zuführeinrichtung (9) ist typischerweise als ein Gürtelserver ausgebildet.

Die Seitenstreifen (4, 5) dienen beim Reifenrohling (7) zur Verstärkung eines Flankenbereiches. Die Seitenstreifen (4, 5) werden dabei typischerweise als Belt Edge Filler (BEF) bezeichnet.

## Patentansprüche

1. Verfahren zur Herstellung von Reifenrohlingen, bei dem mindestens ein streifenförmiges Material mindestens einer Reifenaufbautrommel zugeführt wird und bei dem mindestens ein Seitenstreifen (4, 5) vor einem Längenzuschnitt mit einem Gürtelstreifen (3) verbunden wird und eine Querausrichtung der Kombination des Gürtelstreifens (3) mit dem mindestens einen Seitenstreifen (4, 5) unter Verwendung mindestens einer Kamera (8) durchgeführt wird, die einen Absatz (12, 13) im Übergang des Gürtelstreifens (3) zum Seitenstreifen (4, 5) erfasst, **dadurch gekennzeichnet, dass** der Absatz (12, 13) unter Verwendung einer Auswertungseinrichtung (12) erkannt wird, die eine Bildauswertung durchführt.

2. Verfahren nach Anspruch 1, **dadurch gekennzeichnet, dass** eine von einer Beleuchtung verursachte Schattenbildung ausgewertet wird.

3. Verfahren nach einem der Ansprüche 1 oder 2, **dadurch gekennzeichnet, dass** zusätzlich eine Erfassung eines Außenrandes des Seitenstreifens (4, 5) durchgeführt wird.

4. Verfahren nach einem der Ansprüche 1 bis 3, **dadurch gekennzeichnet, dass** im Bereich beider Längskanten des Gürtelstreifens (2) die Erfassung von Absätzen (12, 13) durchgeführt wird.

5. Verfahren nach einem der Ansprüche 1 bis 4, **dadurch gekennzeichnet, dass** basierend auf der Erfassung der Absätze (12, 13) eine Mittenausrichtung des Gürtelstreifens (3) durchgeführt wird.

6. Verfahren nach Anspruch 5, **dadurch gekennzeichnet, dass** die Mittenausrichtung durch eine Querverschiebung einer Zuführeinrichtung (9) für den Gürtelstreifen (3) durchgeführt wird.

7. Vorrichtung zur Herstellung von Reifenrohlingen, die mindestens eine Reifenaufbautrommel und mindestens eine Zuführeinrichtung für ein streifenförmiges Material aufweist und bei der eine Einrichtung zur Verbindung mindestens eines Seitenstreifens (4, 5) mit einem Gürtelstreifen (3) in einer Transportrichtung des Gürtelstreifens (3) vor einer Einrichtung zur Durchführung eines Längenzuschnittes des Gürtelstreifens (3) angeordnet ist und bei der eine Einrichtung zur Querausrichtung der Kombination des Gürtelstreifens (3) und des mindestens einen Seitenstreifens (4, 5) eine Kamera (8) aufweist, **dadurch gekennzeichnet, dass** die Kamera (8) mit einer Auswertungseinrichtung (10) gekoppelt ist, die zur Erkennung eines Absatzes (12, 13) im Bereich eines Überganges des Gürtelstreifens (3) zum Seitenstreifen (4, 5) ausgebildet ist und die zur Durchführung einer Bildauswertung ausgebildet ist.

8. Vorrichtung nach Anspruch 7, **dadurch gekennzeichnet, dass** die Auswertungseinrichtung (10) zur Durchführung einer Bildauswertung ausgebildet ist.

9. Vorrichtung nach Anspruch 7 oder 8, **dadurch gekennzeichnet, dass** die Kamera (8) sowohl zur Erfassung von Absätzen (12, 13) als auch zur Erfassung von Rändern des mindestens einen Seitenstreifens (4,5) angeordnet ist.

10. Vorrichtung nach einem der Ansprüche 7 bis 9, **dadurch gekennzeichnet, dass** die Kamera (8) zur Erfassung von Absätzen (12, 13) im Bereich einander gegenüberliegender Längskanten des Gürtelstreifens (3) angeordnet ist.

11. Vorrichtung nach einem der Ansprüche 7 bis 10, **dadurch gekennzeichnet, dass** die Auswertungseinrichtung (10) mit einer Stelleinrichtung (11) zur Durchführung einer Mittenausrichtung des Gürtelstreifens (3) verbunden ist.

12. Vorrichtung nach Anspruch 11, **dadurch gekennzeichnet, dass** die Zuführeinrichtung (9) zur Durchführung der Mittenausrichtung relativ zu einer Längsrichtung (15) querverschieblich angeordnet ist.

## Claims

1. Method of manufacturing green tyres, in which at least one strip-shaped material is fed to at least one tyre-building drum and in which at least one side strip (4, 5) is connected, upstream of a cutting-to-length operation, to a belt strip (3), and a transverse alignment of the combination of the belt strip (3) with the at least one side strip (4, 5) is carried out using at least one camera (8) which detects an offset (12, 13) in the transition of the belt strip (3) to the side strip (4, 5), **characterised in that** the offset (12, 13) is identified using an evaluating apparatus (10) which carries out an image evaluation.

2. Method according to Claim 1, **characterised in that** shadow formation caused by illumination is evaluated.

3. Method according to either of Claims 1 or 2, **characterised in that** detection of an outer rim of the side strip (4, 5) is additionally carried out.

4. Method according to one of Claims 1 to 3, **characterised in that** the detection of offsets (12, 13) is carried out in the region of both longitudinal edges of the belt strip (3).

5. Method according to one of Claims 1 to 4, **characterised in that** a central alignment of the belt strip (3) is carried out on the basis of detection of the offsets (12, 13).

6. Method according to Claim 5, **characterised in that** the central alignment is carried out by transverse displacement of a feed apparatus (9) for the belt strip (3).

7. Device for manufacturing green tyres, which has at least one tyre-building drum and at least one feed apparatus for a strip-shaped material and in which an apparatus for connecting at least one side strip (4, 5) to a belt strip (3) is arranged upstream, in a direction of transport of the belt strip (3), of an apparatus for carrying out a cutting-to-length of said belt strip (3), and in which an apparatus for the transverse alignment of the combination of the belt strip (3) and the at least one side strip (4, 5) has a camera (8), **characterised in that** the camera (8) is coupled to an evaluating apparatus (10) which is designed for identifying an offset (12, 13) in the region of a transition of the belt strip (3) to the side strip (4, 5), and which is designed for carrying out an image evaluation.

8. Device according to Claim 7, **characterised in that** the evaluating apparatus (10) is designed for carrying out an image evaluation.

9. Device according to Claim 7 or 8, **characterised in that** the camera (8) is arranged both for detecting offsets (12, 13) and also for detecting rims of the at least one side strip (4, 5).

10. Device according to one of Claims 7 to 9, **characterised in that** the camera (8) is arranged for detecting offsets (12, 13) in the region of mutually opposite longitudinal edges of the belt strip (3).

11. Device according to one of Claims 7 to 10, **characterised in that** the evaluating apparatus (10) is connected to a positioning apparatus for carrying out a central alignment of the belt strip (3).

12. Device according to Claim 11, **characterised in that** the feed apparatus (9) for carrying out the central alignment is arranged so as to be transversely displaceable relative to a longitudinal direction (15).

## Revendications

1. Procédé de fabrication de pneus crus, dans lequel au moins un matériau en forme de bande est amené à au moins un tambour de fabrication de pneus, et dans lequel au moins une bande latérale (4, 5) est reliée à une bande de ceinture (3) avant une coupe longitudinale et une orientation transversale de la combinaison de la bande de ceinture (3) avec au moins une bande latérale (4, 5) est effectuée en utilisant au moins une caméra (8), qui comprend un élément (12, 13) dans la zone de transition entre la bande de ceinture (3) et la bande latérale (4, 5),
**caractérisé en ce que** l'élément (12, 13) est détecté par un dispositif d'évaluation (12) qui procède à une évaluation de l'image.

2. Procédé selon la revendication 1,
**caractérisé en ce que** la formation d'ombre, provoquée par un éclairage, est évaluée.

3. Procédé selon revendication 1 ou 2,
**caractérisé en ce qu'**une détection d'un bord extérieur de la bande latérale (4, 5) est exécutée en plus.

4. Procédé selon l'une des revendications 1 à 3,
**caractérisé en ce que** la détection des éléments (12, 13) est effectuée dans la région des deux côtés longitudinaux de la bande de ceinture (2).

5. Procédé selon l'une des revendications 1 à 4,
**caractérisé en ce que**, sur la base de la détection des éléments (12, 13), est effectué un centrage de la bande de ceinture (3).

6. Procédé selon la revendication 5,
**caractérisé en ce que** le centrage de la bande de ceinture (3) est effectué par un déplacement transversal d'un dispositif d'alimentation (9).

7. Dispositif de fabrication de pneus crus qui comprend au moins un tambour de fabrication de pneus et au moins un dispositif d'alimentation de matériau en forme de bande, et dans lequel une installation d'assemblage d'au moins une bande latérale (4, 5) et d'une bande de ceinture (3) est disposée, dans une direction de transport de la bande de ceinture (3), en amont d'un installation de coupe longitudinale de la bande de ceinture (3), et dans lequel une installation d'orientation transversale de la combinaison de la bande de ceinture (3) et d'au moins une bande latérale (4, 5) est dotée d'une caméra (8),
**caractérisé en ce que** la caméra est couplée avec un système d'évaluation (10), qui est conçu pour la détection d'un élément (12, 13) dans la zone de transition entre la bande de ceinture (3) et la bande latérale (4, 5) et pour une évaluation de l'image.

8. Dispositif selon la revendication 7,
**caractérisé en ce que** le système d'évaluation (10) est conçu pour procéder à une évaluation de l'image.

9. Dispositif selon revendication 7 ou 8,
**caractérisé en ce que** la caméra (8) est disposée pour capter aussi bien les éléments (12, 13) que les bords de la bande latérale (4, 5) au moins prévue.

10. Dispositif selon l'une des revendications 7 à 9,
**caractérisé en ce que** la caméra (8) est disposée pour capter des éléments (12, 13) dans la région des bords longitudinaux de la bande de ceinture (3) opposés l'un à l'autre.

11. Dispositif selon l'une des revendications 7 à 10,
**caractérisé en ce que** le système d'évaluation (10) est relié à un système de réglage (11) pour l'exécution d'une orientation centrale de la bande de ceinture (3).

12. Dispositif selon la revendication 12,
**caractérisé en ce que** le dispositif d'alimentation (9), pour l'exécution de l'orientation centrale, est peut être déplacé transversalement par rapport à une direction longitudinale (15),
